# EUROPÄISCHE PATENTSCHRIFT

(11) **EP 1 018 061 B1**
(45) Veröffentlichungstag und Bekanntmachung des Hinweises auf die Patenterteilung: **09.04.2008**
(21) Anmeldenummer: 98962265.9
(22) Anmeldetag: 16.11.1998
(51) Int. Cl.: G05B 19/042, G05B 19/418

(54) **VERFAHREN UND SYSTEM ZUR VERARBEITUNG VON MESSWERTEN EINER TECHNISCHEN ANLAGE**
METHOD AND SYSTEM FOR PROCESSING MEASURED VALUES IN A TECHNICAL FACILITY
PROCEDE ET SYSTEME DE TRAITEMENT DE VALEURS MESUREES DANS UNE INSTALLATION INDUSTRIELLE

(30) Priorität: 28.11.1997 DE 19752948
(43) Veröffentlichungstag der Anmeldung: 12.07.2000
(73) Patentinhaber: SIEMENS AKTIENGESELLSCHAFT, 80333 München (DE)
(72) Erfinder: ZIMMER, Axel, D-91085 Weisendorf (DE); LENHART, Bernd, D-96193 Wachenroth (DE); LANG, Andreas, D-76751 Jockgrim (DE)
(86) Internationale Anmeldenummer: PCT/DE1998/003353
(87) Internationale Veröffentlichungsnummer: WO 1999/028795

(56) Entgegenhaltungen:
- EP-A- 0 620 510
- GERNDT R ET AL: "BAUKASTEN DER FELDBUS-ASICS EINE ASIC-ARCHITEKTUR FUER UNTERSCHIEDLICHE FELDBUSSYSTEME" ELEKTRONIK, Bd. 43, Nr. 12, 14. Juni 1994, Seiten 78-80, 82 - 84, XP000464139
- SCHLEISIEK-KERN K ET AL: "DAS FELDBUS-CHAMAELEON PROZESSOR WIRD PER SOFTWARE ZUM FELDBUS-CONTROLLER NACH WUNSCH" ELEKTRONIK, Bd. 41, Nr. 20, 29. September 1992, Seiten 50-54, 56 - 58, XP000311735

## Beschreibung

Die Erfindung betrifft ein Verfahren zur Verarbeitung von Meßwerten einer technischen Anlage, insbesondere einer Kraftwerksanlage, mit einer Anzahl von Feldgeräten, die über einen Datenbus mit einem Automatisierungssystem verbunden sind. Sie bezieht sich weiter auf ein entsprechendes System zur Meßwertverarbeitung.

Üblicherweise wird eine Kraftwerksanlage mittels einer Vielzahl von einzelnen oder zusammenwirkenden Steuer- und Regelfunktionen eines Automatisierungssystems automatisch gesteuert und überwacht. Das Automatisierungssystem umfaßt eine Anzahl von Datenverarbeitungseinheiten, die über einen gemeinsamen Datenbus miteinander und mit mehreren Feldgeräten kommunizieren. Unter Feldgerät wird hier jede Art von in einer technischen Anlage eingesetztem Aktor oder Sensor, insbesondere eine Armatur oder ein Motor bzw. ein Temperatursensor oder dergleichen, verstanden.

Ein derartiges Automatisierungssystem ist aus der DE-OS 195 12 372 bekannt. Dabei werden die von Feldgeräten erfaßten Meßwerte über einen Datenbus an das Automatisierungssystem gesendet, wobei die Meßwerte in einem Kommunikationsmodul in ein für das Automatisierungssystem verarbeitbares Format umgewandelt werden.

Um der hohen Komplexität großtechnischer Kraftwerksanlagen gerecht zu werden, sind die Datenverarbeitungseinheiten üblicherweise dezentral angeordnet. Dies führt zu ständig neuen Anforderungen an den Datenaustausch aufgrund des Anstiegs der zu übertragenden Datenmenge und an das Datenbussystem infolge unterschiedlicher Datenformate. Somit wurde eine Vielzahl von verschiedenen Datenbussystemen geschaffen, die sich hinsichtlich der Datenübertragung wesentlich voneinander unterscheiden.

Diese heterogene Vielzahl von Datenbussystemen wirkt sich nachteilig auf die Ankopplung der Feldgeräten an das Automatisierungssystem aus. Insbesondere bei nachträglich zu installierenden Feldgeräten sind aufgrund der unterschiedlichen Datenformate umfangreiche Anpassungen oder Änderungen des Automatisierungssystems notwendig.

Aus EP-A-0 620 510 ist ein elektrisches Gerät mit konfigurierbarer Schnittstelle bekannt, bei dem eine signalverarbeitende Intelligenz in Form eines Mikroprozessors über einen Systembus mit Baugruppen verbunden ist. Einige der Baugruppen sind als intelligente Baugruppen mit Mikrocontrollern sowie konfigurierbaren Schaltungen gestaltet. Die intelligenten Baugruppen weisen ferner Remanentspeicher auf. Mittels dieser Remanentspeichern sind die konfigurierbaren Schaltungen insbesondere bei einem Neustart so konfigurierbar, dass eine Schnittstelle eine vorbestimmte Regelung eines Schrittmotors realisieren kann, während eine andere Schnittstelle an einem Feldbus angeschlossen werden kann.

Der Erfindung liegt daher die Aufgabe zugrunde, ein Verfahren der eingangs genannten Art anzugeben, das in besonders einfacher Art und Weise die Anbindung verschiedener Feldgeräte an ein Automatisierungssystem ermöglicht. Des weiteren soll ein zur Durchführung des Verfahrens besonders geeignetes System angegeben werden.

Bezüglich des Verfahrens wird die Aufgabe erfindungsgemäß gelöst durch die Merkmale des Anspruchs 1. Vorteilhafte Weiterbildungen sind Gegenstand der auf diesen rückbezogenen Unteransprüche.

Bezüglich des Systems wird die genannte Aufgabe erfindungsgemäß gelöst durch die Merkmale des Anspruchs 3. Dabei ist zur Umwandlung eines Meßwertes oder eines Steuerwertes in ein Prozeßsignal für jedes Feldgerät ein gerätespezifischer Treiberbaustein vorgesehen, dem mindestens ein funktionsspezifischer Technologiebaustein zur Verarbeitung dieses Prozeßsignals zugeordnet ist. Ein im Technologiebaustein generiertes Steuersignal wird in umgekehrter Richtung über den Treiberbaustein an das Feldgerät übertragen.

Die Erfindung geht dabei von der Überlegung aus, daß anstelle der jeweils einzelnen Anbindungen der Feldgeräte an das Automatisierungssystem mehrere Feldgeräte gleichen Typs zusammengefaßt werden, wobei deren jeweilige Automatisierungsfunktion unabhängig von der Ankopplung an das Automatisierungssystem sein sollte. Dazu müßte die Umwandlung des empfangenden Meßwertes getrennt von der Verarbeitung des Prozeßsignals erfolgen. Diese Entkopplung der Automatisierungsfunktion von der Ankopplung des Feldgerätes kann mittels einer stufenweisen Verarbeitung realisiert werden. In einer ersten Stufe wird sowohl die Umwandlung des Meßwertes in ein für die Datenverarbeitung lesbares Datenformat (Prozeßsignal) als auch die Umwandlung des Prozeßsignales in ein für die Datenübertragung geeignetes Datenformat ermöglicht werden. Erst in einer zweiten Stufe wird dann das in der ersten Stufe umgewandelte Prozeßsignal entsprechend der zugrundeliegenden Automatisierungsfunktion verarbeitet werden.

Je nach Art oder Typ des Feldgeräts überträgt dieses einen Meßwert oder mehrere verschiedenartige Meßwerte an das Automatisierungssystem. Beispielsweise überträgt das Feldgerät "Motor" als binäre Meßwerte die Rückmeldungen "Motor ein/aus" und die Störmeldung "Motor gestört" sowie als analogen Meßwert das Analogsignal "Motortemperatur", Das Feldgerät "Temperatursensor" liefert dagegen als Meßwert das Analogsignal "Temperatur". Ebenso werden an das Feldgerät Steuersignale, wie z. B. "Motor ein/aus" übertragen.

Da die Anzahl und die Art sowohl der Meßwerte als auch der Steuersignale der Feldgeräte gleichen Typs identisch sind, umfaßt der Treiberbaustein zweckmäßigerweise eine typspezifische Schnittstelle. Für jeden Typ von Feldgerät ist somit jeweils ein eigener Treiberbaustein mit einer diesen Typ charakterisierenden Schnittstelle vorgesehen. Diese typspezifische Schnittstelle dient der Ankopplung der Feldgeräte gleichen Typs an das Automatisierungssystem. Dabei kann die Anzahl der an diesen Treiberbaustein angekoppelten Feldgeräte variieren.

Die typ- oder gerätespezifische Schnittstelle dient einerseits zur Umwandlung des über den Datenbus übertragenen Meßwertes des Feldgeräts in ein für den Technologiebaustein lesbares Datenformat und damit zur Umwandlung in das sogenannte Prozeßsignal. Andererseits dient die typspezifische Schnittstelle zur Umwandlung eines Steuersignals des Technologiebausteins zur Ansteuerung des Feldgerätes in ein für die Datenübertragung geeignetes Datenformat. Somit sind Anpassungen bei Änderungen des Datenbussystems oder des Feldgeräts besonders vorteilhaft getrennt von der eigentlichen Automatisierungsfunktion in dem Treiberbaustein durchführbar.

Zur Anbindung des Treiberbausteins an den Technologiebaustein umfaßt der Treiberbaustein mindestens eine funktionsspezifische Schnittstelle. Die Anzahl und Art der funktionsspezifischen Schnittstellen ist abhängig von der Funktionalität des dem Treiberbaustein zugrundeliegenden Typs des Feldgerätes oder Gerätetyps. Die funktionsspezifische Schnittstelle überträgt das Prozeßsignal zur Verarbeitung an den jeweiligen Technologiebaustein.

Analog zur Anzahl der funktionsspezifischen Schnittstellen sind in Abhängigkeit von der Funktionalität des Feldgeräts ein Technologiebaustein oder mehrere Technologiebausteine vorgesehen. Jeder Technologiebaustein führt die für die Steuerung und Überwachung des Feldgerätes relevanten Funktionen aus. Gegebenenfalls generiert der Technologiebaustein Steuersignale für das Feldgerät sowie Meldesignale für die Prozeßführung.

Zur Überwachung und Darstellung des Zustandes des Feldgeräts ist der Technologiebaustein vorteilhafterweise mit einem Prozeßführungssystem verbunden. Durch die Darstellung des Zustandes des Feldgeräts, z.B. "Ventil offen", auf einem Bildschirm oder auf einem Drucker des Prozeßführungssystems, ist es dem Personal der Kraftwerksanlage ermöglicht, besonders schnell auf Anlagenzustände reagieren zu können.

Die mit der Erfindung erzielten Vorteile bestehen insbesondere darin, daß mittels der in dem Treiberbaustein einerseits sowie in dem Technologiebaustein andererseits realisierten Funktion eine Trennung der geräteabhängigen Ankopplung an das Automatisierungssystem von der jeweiligen Automatisierungsfunktion des entsprechenden Feldgerätes gegeben ist, da mittels des Treiberbausteins eine geräteunabhängige Schnittstelle für den Technologiebaustein realisiert ist. Unter geräteunabhängig wird hierbei die Unabhängigkeit der Automatisierungsfunktion des Technologiebausteines von einem beliebigen Datenbussystem sowie einem beliebigen Feldgerät verstanden. Somit sind die in ihren Funktionen unterschiedlichen Technologiebausteine ohne Änderungen an jeden Treiberbaustein verschiedener Gerätetypen oder Feldgeräte anbindbar.

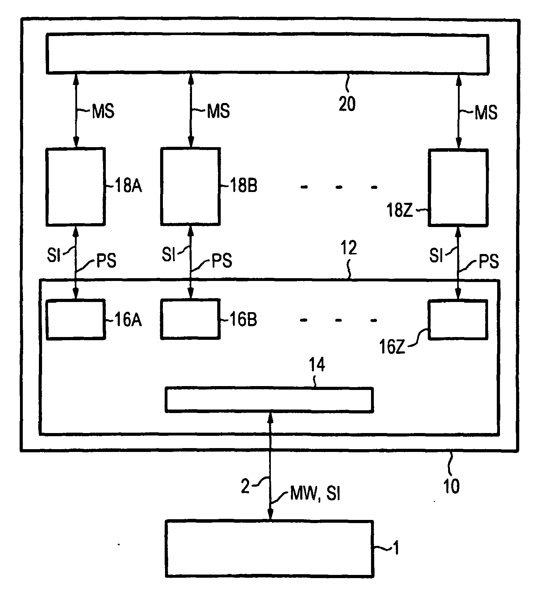

Ein Ausführungsbeispiel der Erfindung wird anhand einer Zeichnung näher erläutert. Darin zeigt die Figur ein mit einem Automatisierungssystem verbundenes Feldgerät.

Das Feldgerät 1 ist eine Komponente oder ein Anlagenteil, z.B. ein Motor, ein Ventil oder ein Temperaturgeber, einer nicht näher dargestellten technischen Anlage. Das Feldgerät 1 ist über einen Datenbus 2 mit einem Automatisierungssystem 10 verbunden. Mittels in dem Automatisierungssystem 10 ablaufender Steuerungs- und Regelungsfunktionen wird das Feldgerät 1 gesteuert und/oder überwacht.

Das Automatisierungssystem 10 umfaßt einen Treiberbaustein 12, der eine geräte- oder gerätetypspezifische Schnittstelle 14 zur Ankopplung des Feldgeräts 1 bzw. einer Anzahl von Feldgeräten 1 gleichen Typs aufweist. So kann beispielsweise jedes Feldgerät 1 seinen eigenen gerätespezifischen Treiberbaustein 12 aufweisen. Es können aber auch mehrere Feldgeräte 1 eines Typs an einem gemeinsamen Treiberbaustein 12 angekoppelt sein. Bei vorhandener freier Rechenleistung im Feldgerät 1 kann der Treiberbaustein 12 auch Bestandteil des Feldgerätes 1 sein.

Zur Steuerung und Überwachung des Feldgerätes 1 umfaßt der Treiberbaustein 12 mindestens eine funktionsspezifische Schnittstelle 16. Die funktionsspezifische Schnittstelle 16 ist mit einem die entsprechende Automatisierungsfunktion des Feldgerätes 1 realisierenden Technologiebaustein 18 verbunden. Je nach Typ des Feldgerätes 1 variiert die Anzahl der Automatisierungsfunktionen und demzufolge auch die Anzahl der funktionsspezifischen Schnittstellen 16A bis 16Z sowie die Anzahl der dazugehörigen Technologiebausteine 18A bis 18Z. Der oder jeder Technologiebaustein 18A bis 18Z kann wiederum in das entsprechende Feldgerät 1 integriert sein.

So sind beispielsweise die Automatisierungsfunktionen des eine Pumpe repräsentierenden Feldgerätes 1 durch drei Technologiebausteine 18A bis 18C, nämlich "Steuerung", "Uberwachung" und "Störung", realisiert, während die Automatisierungsfunktion des einen Temperatursensor repräsentierenden Feldgerätes 1 durch nur einen Technologiebaustein 18, nämlich "Überwachung", realisiert ist. Der Treiberbaustein 12 des Feldgerätes "Pumpe" umfaßt demzufolge drei funktionsspezifische Schnittstellen 16A bis 16C, während der Treiberbaustein 12 des Feldgerätes "Temperatursensor" lediglich eine funktionsspezifische Schnittstelle 16 aufweist.

Beim Betrieb der Anlage wird der von dem Feldgerät 1 erfaßte Meßwert MW über den Datenbus 2, z. B. einen Feldbus oder einen Ethernet-Bus, an die typspezifische Schnittstelle 14 des zugehörigen Treiberbausteins 12 übertragen. Der Treiberbaustein 12 wandelt das vom Datenbus 2 abhängige Datenformat des Meßwertes MW in ein für den jeweiligen Technologiebaustein 18A bis 18Z verarbeitbares Prozeßsignal PS um. In Abhängigkeit von der Signalart des Prozeßsignals PS ordnet der Treiberbaustein 12 dieses der entsprechenden funktionsspezifischen Schnittstelle 16A bis 16Z zu.

Die funktionsspezifische Schnittstelle 16 überträgt das Prozeßsignal PS zu dessen Verarbeitung an den zugehörigen Technologiebaustein 18. Der Technologiebaustein 18 führt die relevanten Steuerungs- und Regelungsfunktionen für das Feldgerät 1 aus. Gegebenenfalls von dem Technologiebaustein 18 generierte Steuersignale SI oder Meldesignale MS sind der funktionsspezifischen Schnittstelle 16 bzw. einem Prozeßführungssystem 20 zuführbar.

Sind z. B. für das einen Motor repräsentierende Feldgerät 1 vier Technologiebausteine 18A bis 18D, nämlich "Steuerung", "Analogwert", "Binärwert" bzw. "Störmeldung", vorgesehen, so werden im Technologiebaustein 18A (Steuerung) die Rückmeldungen des Feldgeräts 1 verarbeitet. Dort werden auch eventuelle Steuerbefehle des Prozeßführungssystems 20 verarbeitet und die Steuersignale SI für das Feldgerät 1 generiert. In den Technologiebausteinen 18B (Analogwert), 18C (Binärwert) und 18D (Störmeldung) werden der Meßwert "Motortemperatur", die Meldung "Motor ein" bzw. die Meldung "Motor gestört" verarbeitet.

Durch das bereits in der funktionsspezifische Schnittstelle 16 vorliegende und für den Technologiebaustein 18 lesbare Format des Prozeßsignales PS ist die Automatisierungsfunktion des Technologiebausteins 18 von der Ankopplung des Feldgerätes 1 an das Automatisierungssystem 10 getrennt. Somit sind bei Änderungen des Datenbusses 2 oder des Feldgerätes 1 Anpassungen im Technologiebaustein 18 vermieden. Für alle Feldgeräte 1 gleichen Typs ist somit lediglich der diesen Typ charakterisierende Treiberbaustein 12 anzupassen.

## Patentansprüche

1. Verfahren zur Verarbeitung von Messwerten einer technischen Anlage mit einer Anzahl von Feldgeräten (1), wobei ein von einem Feldgerät erfasster Messwert (MW) über einen Datenbus (2) einem Automatisierungssystem (10) übermittelt wird,
**dadurch gekennzeichnet,**
**dass** Feldgeräte gleichen Typs aus der Anzahl der Feldgeräte (1) zu einer Typgruppe zusammengefasst werden,
**dass** jeder Typgruppe ein Treiberbaustein (12) zugeordnet wird,
**dass** der Messwert (MW) an eine den Typ der Feldgeräte charakterisierende Schnittstelle (14) des Treiberbausteins (12) übertragen wird,
**dass** im Treiberbaustein (12) das vom Datenbus (2) abhängige Datenformat des Messwertes (MW) in ein für einen jeweiligen funktionsspezifischen Technologiebaustein (18A bis 18Z) verarbeitbares Prozesssignal (PS) umgewandelt wird und
in Abhängigkeit von der Signalart des Prozesssignals (PS) dieses einer funktionsspezifischen Schnittstelle (16A bis 16Z) zugeordnet wird, über die das Prozesssignal (PS) an den zugehörigen Technologiebaustein (18A bis 18Z) übertragen wird.

2. Verfahren nach Anspruch 1,
**dadurch gekennzeichnet,**
**dass** ein vom Technologiebaustein (18A bis 18Z) generiertes Steuersignal (SI) über den Treiberbaustein (12) an das Feldgerät (1) übertragen wird.

3. System zur Verarbeitung von Messwerten einer technischen Anlage mit einer Anzahl von Feldgeräten (1), die über einen Datenbus (2) mit einem Automatisierungssystem (10) verbunden sind,
**dadurch gekennzeichnet,**
**dass** der Datenbus (2) an einen Treiberbaustein (12) angeschlossen ist,
**dass** der Treiberbaustein (12) zwischen dem Datenbus (2) und mindestens einem funktionsspezifischem Technologiebaustein (18A bis 18Z) des Automatisierungssystems (10) angeordnet ist,
wobei der Treiberbaustein (12) zur Umwandlung eines vom Datenbus (2) abhängigen Datenformats eines im Datenbus übertragenen Messwertes (MW) in ein für die funktionsspezifischen Technologiebausteine (18A bis 18Z) verarbeitbares Prozesssignal (PS) und zur Zuordnung in Abhängigkeit von der Signalart des Prozesssignals zu dem zugehörigem funktionsspezifischem Technologiebaustein (18A bis 18Z) ausgeführt ist, wobei der Treiberbaustein (12) derart ausgestaltet ist, dass er eine den Typ der Feldgeräte charakterisierende Schnittstelle (14) zur Übermittlung des vom Datenbus übertragenen Messwerts (MW) und weiterhin mindestens eine funktionsspezifische Schnittstelle (16A bis 16Z) zur Übermittlung des umgewandelten Prozesssignals (PS) an den zugehörigen funktionsspezifischen Technologiebaustein (18A bis 18Z) umfasst.

4. System nach Anspruch 3,
**dadurch gekennzeichnet, daß** anstelle der jeweils einzelnen Anbindungen der Feldgeräte an das Automatisierungssystem mehrere Feldgeräte gleiche Typs zusammengefasst sind.

5. System nach einem der vorhergehenden Ansprüche,
**dadurch gekennzeichnet, daß** die funktionsspezifischen Technologiebausteine (18A bis 18Z) mit einem Prozeßführungssystem (20) verbunden sind.

## Claims

1. Method for processing measurements in a technical facility containing a number of field devices (1), with a measurement (MW) detected by a field device being transmitted to an automation system (10) via a data bus (2),
**characterized in that**
field devices of the same type from the number of field devices (1) are combined into a type group,
each type group is allocated a driver chip (12),
the measurement (MW) is transmitted to an interface (14) of the driver chip (12), said interface being characteristic of the type of the field devices,
in the driver chip (12), the data format, which is dependent on the data bus (2), of the measurement (MW) is converted into a process signal (PS) that can be processed by a respective function-specific technology chip (18A to 18Z), and the process signal is assigned to a function-specific interface (16A to 16Z) according to the signal type of the process signal (PS), via which interface the process signal (PS) is transmitted to the associated technology chip (18A to 18Z).

2. Method according to Claim 1,
**characterized in that**
a control signal (SI) generated by the technology chip (18A to 18Z) is transmitted to the field device (1) via the driver chip (12).

3. System for processing measurements in a technical facility containing a number of field devices (1), which are connected to an automation system (10) via a data bus (2),
**characterized in that**
the data bus (2) is connected to a driver chip (12),
the driver chip (12) is arranged between the data bus (2) and at least one function-specific technology chip (18A to 18Z) of the automation system (10),
with the driver chip (12) being implemented for converting a data format, which is dependent on the data bus (2), of a measurement (MW) transmitted in the data bus into a process signal (PS) that can be processed by the function-specific technology chips (18A to 18Z), and for assigning to the associated function-specific technology chip (18A to 18Z) according to the signal type of the process signal (PS),
with the driver chip (12) being designed such that it contains an interface (14), characteristic of the type of the field devices, for transmitting the measurement (MW) transmitted by the data bus, and also at least one function-specific interface (16A to 16Z) for transmitting the converted process signal (PS) to the associated function-specific technology chip (18A to 18Z).

4. System according to Claim 3,
**characterized in that**
instead of interfacing each of the field devices individually to the automation system, a plurality of field devices of the same type are combined.

5. System according to any of the previous claims,
**characterized in that**
the function-specific technology chips (18A to 18Z) are connected to a process control system (20).

## Revendications

1. Procédé de traitement de valeurs mesurées d'une installation technique comportant un certain nombre d'outils (1), une valeur mesurée (MW) acquise, par un outil étant transmise par l'intermédiaire d'un bus de données (2) à un système d'automatisation (10),
**caractérisé par le fait que**
- on réunit des outils du même type parmi la multiplicité des outils (1) en un groupe de type,
- on associe à chaque groupe de type un composant pilote (12),
- on transmet la valeur mesurée (MW) à une interface (14) caractérisant le type des outils, du composant pilote (12),
- dans le composant pilote (12), on convertit le format de données, dépendant du bus de données (2), de la valeur mesurée (MW) en un signal de processus (PS) pouvant être traité pour un composant technique (18A à 18Z) respectif, spécifique à une fonction, et, en fonction du type du signal de processus (PS), on associe celui-ci à une interface (16A à 16Z) qui est spécifique à une fonction et par l'intermédiaire de laquelle on transmet le signal de processus (PS) au composant technique associé (18A à 18Z).

2. Procédé selon la revendication 1,
**caractérisé par le fait que** l'on transmet un signal de commande (SI) produit par le composant technique (18A à 18Z) à l'outil (1) par l'intermédiaire du composant pilote (12).

3. Système de traitement de valeurs mesurées d'une installation technique comportant un certain nombre d'outils (1) qui sont reliés à un système d'automatisation (10) par l'intermédiaire d'un bus de données (2),
**caractérisé par le fait que**
- le bus de données (2) est raccordé à un composant pilote (12),
- le composant pilote (12) est placé entre le bus de données (2) et au moins un composant technique (18A à 18Z), spécifique à une fonction, du système d'automatisation (10),
le composant pilote (12) étant réalisé en vue de la conversion d'un format de données, dépendant du bus de données (2), d'une valeur mesurée (MW) transmise dans le bus de données en un signal de processus (PS) pouvant être traité pour les composants techniques (18A à 18Z) spécifiques aux fonctions et en vue de l'association, en fonction du type du signal de processus (PS), de celui-ci au composant technique associé (18A à 18Z) spécifique à la fonction
et le composant pilote (12) étant conçu de telle sorte qu'il comprend une interface (14) caractérisant le type des outils pour la transmission de la valeur mesurée (MW) transmise par le bus de données et de plus au moins une interface (16A à 16Z), spécifique à une fonction, pour la transmission du signal de processus converti (PS) au composant technique associé (18A à 18Z) spécifique à la fonction.

4. Système selon la revendication 3,
**caractérisé par le fait que**, à la place des rattachements respectivement individuels des outils au système d'automatisation, plusieurs outils du même type sont réunis.

5. Système selon l'une des revendications précédentes,
**caractérisé par le fait que** les composants techniques (18A à 18Z) spécifiques aux fonctions sont reliés à un système de gestion de processus (20).
